# NEUE EUROPÄISCHE PATENTSCHRIFT

(11) **EP 0 521 324 B2**
(45) Veröffentlichungstag und Bekanntmachung des Hinweises auf die Entscheidung über den Einspruch: **11.06.2003**
(45) Hinweis auf die Patenterteilung: 06.12.1995
(21) Anmeldenummer: 92109902.4
(22) Anmeldetag: 12.06.1992
(51) Int. Cl.: H02G 15/013, H02G 15/192, H02G 15/113

(54) **Kabelmuffe**
Cable sleeve
Manchon de câble

(30) Priorität: 27.06.1991 DE 9107912 U; 27.06.1991 DE 9107913 U
(43) Veröffentlichungstag der Anmeldung: 07.01.1993
(73) Patentinhaber: CCS Technology, Inc., Wilmington, DE 19803 (US)
(72) Erfinder: Stewing, Albert, D-46282 Dorsten (DE)
(74) Vertreter: Sturm, Christoph, Dipl.-Ing.

(56) Entgegenhaltungen:
- EP-A- 0 219 071
- EP-A- 0 421 254
- DE-A- 3 512 165
- DE-A- 3 719 122
- FR-A- 2 530 386
- Prospekt "Universal Closures UCN" der Firma RXS vom Mai 1989
- Prospekt "Universal Closures UCN" der Firma RXS vom Juni 1991

## Beschreibung

Die Erfindung betrifft eine Kabelmuffe für das Verbinden und Abzweigen von Kabeln, insbesondere Fernmeldekabeln, mit einem längsgeteilten Muffenrohr und die Längsteilung begrenzenden Verschlußprofilen, mit zum stirnseitigen Abschluß des Muffenrohres von dem Muffenrohr ummantelten Dichtkörpem mit an unterschiedliche Kabeldurchmesser anpaßbaren Kabeldurchführungen und mit zwischen dem Muffenrohr und den Dichtkörpern in umlaufenden Fixierungsnuten angeordneten Umfangsdichtungen.

Bei derartigen Kabelmuffen, die regelmäßig im Erdreich verlegt werden, muß verständlicherweise eine einwandfreie Abdichtung des Muffenrohres gegen die Dichtkörper erreicht werden. Dazu sind einerseits die Umfangsdichtungen vorgesehen, wird andererseits das Muffenrohr mittels eines oder mehrerer Verschlußspanner, welche die Verschlußprofile hinter- und übergreifen, nicht nur im Bereich der Längsteilung zusammengespannt, sondern auch auf die Dichtkörper gleichsam aufgespannt, um die Umfangsdichtungen in die Fixierungsnuten einzupressen. Da das Muffenrohr aus einer Kunststoffmanschette verhältnismäßig geringer Dicke von beispielsweise 4 mm hergestellt ist, läßt sich beim Umspannen der Dichtkörper eine Überdehnung und daraus resultierende Aufweitung nicht ausschließen. Eine derartige Überdehnung bzw. Aufweitung kann jedoch zu einer Beeinträchtigung der Abdichtung des Muffenrohres gegen die Dichtkörper führen.

Im einzelnen kennt man eine Kabelmuffe mit stirnseitigen Dichtungskörpern und einem längsgeschlitzten Muffenrohr, wobei letzteres über Dichtungen auf die Dichtungskörper aufgepreßt und mittels eines längsseitig entlang des Schlitzes verlaufenden Klemmverschlusses dichtend fixiert ist. Die Dichtungselemente sind als stirnseitige Ringdichtungen und als Längsdichtung in ihrer Lage vor der Montage fixierbar und in ihrer Flexibilität so ausgestaltet, daß der Klemmverschluß bezüglich der Muffenrohrlängsränder und der darauf wirkenden Kraftschlußelemente unter Einhaltung des geforderten Schließdruckes möglichst einfach gestaltet ist, so daß er mit gebräuchlichen Werkzeugen verspannbar ist (vgl. EP-A-0 219 071).

Ferner ist ein Kabelverschluß mit einer ersten und einer zweiten im Abstand voneinander angeordneten Endplatte bekannt, von denen wenigstens eine Endplatte eine Öffnung zur Einführung eines Kabels aufweist. Ferner besitzt diese Kabelmuffe einen ersten und einen zweiten Deckel, die so zusammengefügt werden, daß sie Umfangsteile der Endplatten umschließen. In Längsrichtung sich erstreckende Verbindungen zwischen den Deckeln sind mit Dichtungen ausgefüllt.

Außerdem ist ein Umfangskanal in jeder Endplattenanordnung mit einer Umfangsdichtung ausgefüllt. Die Deckel werden so zusammengebaut, daß sie die Endplattenanordnungen mit den Dichtungen an den Verbindungsstellen umschließen. Dann werden die Deckel aufeinander zu bewegt und aneinander befestigt, indem ein Drahtstützrahmen bewegt wird, der an jeder Seite des Verschlusses angeordnet ist. An dem Drahtstützrahmen ist eine Mehrzahl von Rastfingern drebar befestigt, derart, daß jeder Rastfinger nach einer mittleren bistabilen Position sich schnappend in einen ausgerichteten Sitz entlang dem Verschluß legt. Wenn die Deckel aneinander befestigt sind, dichten die in Längsrichtung und die in Umfangsrichtung verlaufenden Dichtungen ihre zugeordneten Verbindungsstellen ab (vgl. DE-A-35 12 165).

Bei einer anderen bekannten Kabelmuffe zum Verbinden und Abzweigen von Kabeln, insbesondere Fernmeldekabeln unterschiedlicher Durchmesser, ist ein längsgeteiltes Muffenrohr mit einer zwischen den Stoßrändern der Längsteilung einpreßbaren Längsdichtung verwirklicht. Ferner sind zum stirnseitigen Abschluß des Muffenrohres von dem Muffenrohr ummantelte quergeteilte Dichtkörper mit an unterschiedliche Kabeldurchmesser anpaßbaren Kabeldurchführungen und zwischen dem Muffenrohr und den Dichtkörpern in umlaufende Fixierungsnuten einpreßbare Umfangsdichtungen vorgesehen. Die Umfangsdichtungen sind als geteilte Rundschnurdichtungen mit an ihren Teilungsenden sich überlappenden Dichtzungen ausgebildet. Die Rundschnurdichtungen weisen jeweils zwei beidseitig in den Stoßbereich der Dichtkörperhälften eingreifende Dichtansätze mit Fixierungsausnehmungen auf. Jeweils zumindest eine Dichtkörperhälfte weist im Bereich der Fixierungsnut ein Lagerbett für die sich übelappenden Dichtzungen und im Stoßbereich beidseitig eine Lagerausnehmung mit jeweils einer Fixierungsnase auf, die in die Fixierungsausnehmung des in die Lagerausnehmung eingesetzten Dichtansatzes eingreift (vgl. EP-A-0 421 254).

Außerdem ist eine Kabelmuffe mit einem elastischen Muffenrohr und Muffenköpfen bekannt, bei welcher die Muffenköpfe über Verbindungsmittel gegeneinander fixiert sind. Das Muffenrohr weist in seinen Endbereichen Einrastvorrichtungen auf, die derart ausgebildet sind, daß beim Überschieben des Muffenrohres über die gegeneinander fixierten Muffenköpfe ein Einrasten der Muffenköpfe im Muffenrohr zustande kommt (vgl. DE-A-37 19 122).

Endlich kennt man eine Kabelmuffe für das Verbinden und Abzweigen von Kabeln, die aus einem ungeteilten Muffenrohr mit von dem Muffenrohr ummantelten Dichtkörpern besteht. Zur Verstärkung des Muffenrohres ist an den Stirnseiten ein schützender Metallkragen verwirklicht (vgl. FR-A-25 30 386).

Der Erfindung liegt die Aufgabe zugrunde, eine Kabelmuffe zum Verbinden und Abzweigen von Kabeln, insbesondere Fernmeldekabeln, der eingangs beschriebenen Ausführungsform zu schaffen, bei welcher ein besonders kompaktes Verpressen der Längsdichtung mit den Umfangsdichtungen in den Kreuzungsbereichen erreicht und dadurch in den Kreuzungsbereichen der Dichteffekt optimiert wird.

Diese Aufgabe löst die Erfindung bei einer gattungsgemäßen Kabelmuffe dadurch, daß die Längsnut in den innenschenkelfreien Bereichen eine Kammerverengung aufweist - Diese Maßnahmen der Erfindung haben zur Folge, daß beim Verschließen des Muffenrohres und folglich Eindringen des Federprofiles in das Nutprofil die Längsdichtung im Bereich der Kammerverengung in erhöhtem Maße verpreßt wird. Durch die extreme Verpressung der Längsdichtung tritt diese aus den innenschenkelfreien Bereichen heraus und schmiegt sich gleichsam an die Umfangsdichtungen unter Berücksichtigung einer hohen spezifischen Flächenpressung an. Dadurch wird der Dichtungseffekt in den Kreuzungsbereichen von der Längsdichtung und den Umfangsdichtungen optimiert, und zwar selbst unter Berücksichtigung der Tatsache, daß es sich bei den Längsdichtungen und den Umfangsdichtungen um lediglich Rundschnurdichtungen ohne besondere Anformungen für die Kreuzungsbereiche handelt, wenngleich die Rundschnurdichtungen unverändert auch besondere Anformungen aufweisen können. - Um die im Zuge des Verpressens der Längsdichtungen im Bereich der Kammerverengungen auftretenden erhöhten Preß- bzw. Druckkräfte einwandfrei aufnehmen zu können, schlägt die Erfindung weiter vor, und diesem Vorschlag kommt selbständige Bedeutung zu, daß der Außenschenkel des Nutprofils in den Kreuzungsbereichen von der Längsdichtung und den Umfangsdichtungen bzw. in den innenschenkelfreien Bereichen als verstärkter Schenkel ausgebildet ist Dazu kann der Außenschenkel beispielsweise eine Schenkelverdickung aus gleichem Kunststoffmaterial aufweisen. Auf diese Weise wird dafür Sorge getragen, daß der Außenschenkel im Bereich der Kammerverengung nicht ausweichen kann, vielmehr die dort auftretenden erhöhten Druckkräfte einwandfrel aufnehmen kann, so daß tatsächlich die verstärkte Verpressung der Längsdichtung gegen die Umfangsdichtungen unter Erzeugung entsprechend hoher spezifischer Flächenpressungen wirksam wird.

Die Kammerverengung kann in verschiedener Weise erreicht werden. So sieht die Erfindung vor, daß die Kammerverengung durch einen gegen den innenschenkelfreien Bereich ansteigenden Nutengrund des Nutenprofils gebildet ist. Vorzugsweise ist der Anstieg des Nutengrundes als keilförmige oder bogenförmige eingezogene Anformung ausgebildet, die unter Bildung eines spitzen Winkels in der Innenfläche des Muffenrohres ausläuft. Dadurch wird in den Kreuzungsbereichen von der Längsdichtung und den Umfangsdichtungen gleichsam ein keilartiges Austreten der Längsdichtung im Zuge ihrer Verpressung und folglich eine besonders hohe spezifische Flächenpressung zwischen den Umfangsdichtungen und der Längsdichtung erreicht.

Im Ergebnis wird nach Lehre der Erfindung eine Kabelmuffe zum Verbinden und Abzweigen von Kabeln, insbesondere Fernmeldekabein, verwirklicht, die sich in einfacher Weise selbst bei Verwendung herkömmlicher Rundschnurdichtungen für die Längsdichtung und die Umfangsdichtungen durch einen optimalen Dichteffekt selbst in den Kreuzungsbereichen dieser Dichtungen auszeichnet, weil ein besonders kompaktes Verpressen des Dichtungsmaterials unter Erzeugung hoher spezifischer Flächenpressungen ohne Überdehnung und Aufweitung des Muffenrohres im Zuge des Verschließens erreicht wird.

Im folgenden wird die Erfindung anhand einer lediglich ein Ausführungsbeispiel darstellenden Zeichnung näher erläutert; es zeigen:

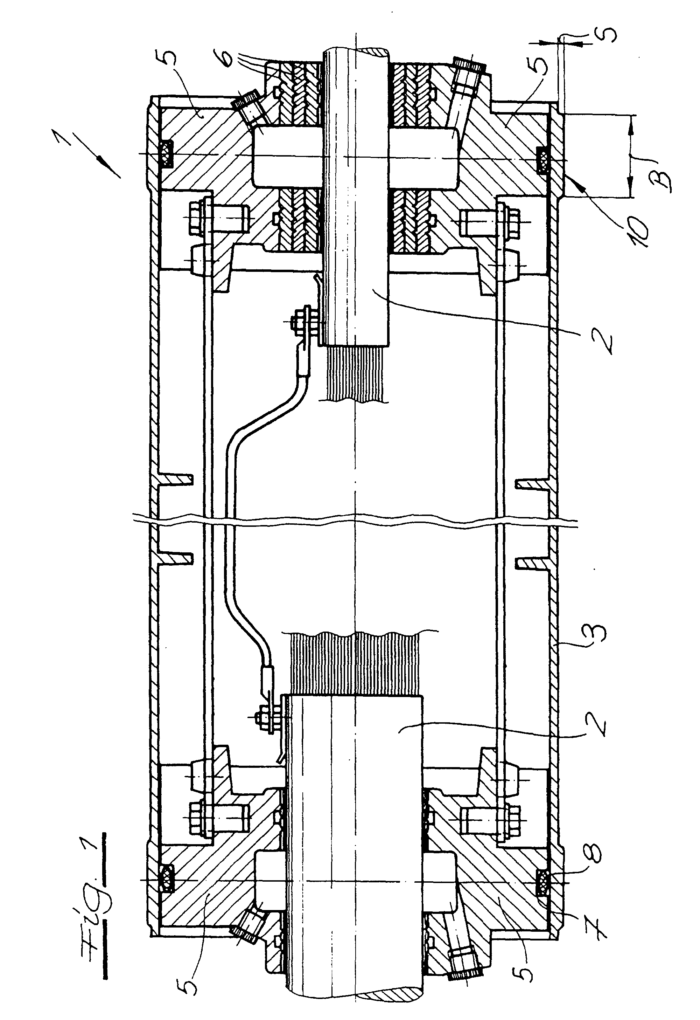

- Fig. 1: eine erfindungsgemäße Kabelmuffe im schematischen Axialschnitt,

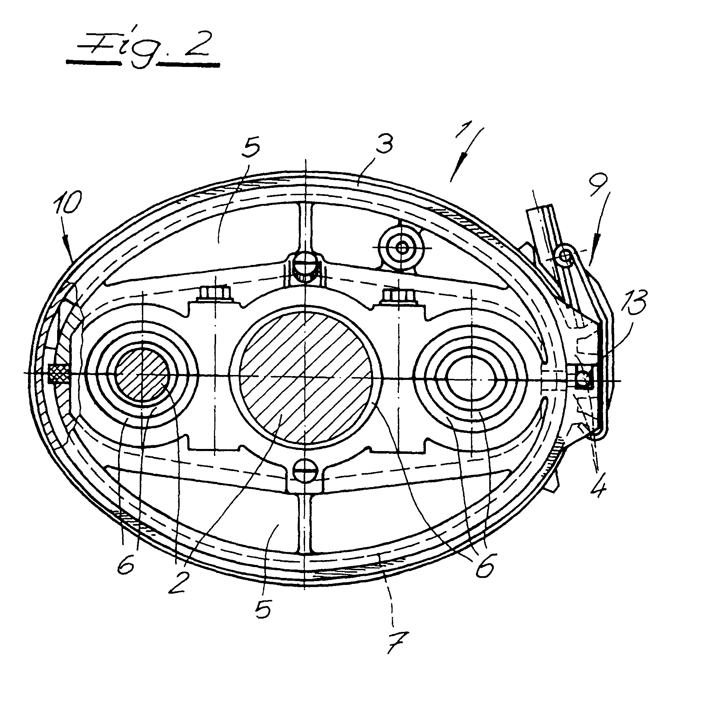

- Fig. 2: den Gegenstand nach Fig. 1 in schematischer Stirnansicht,

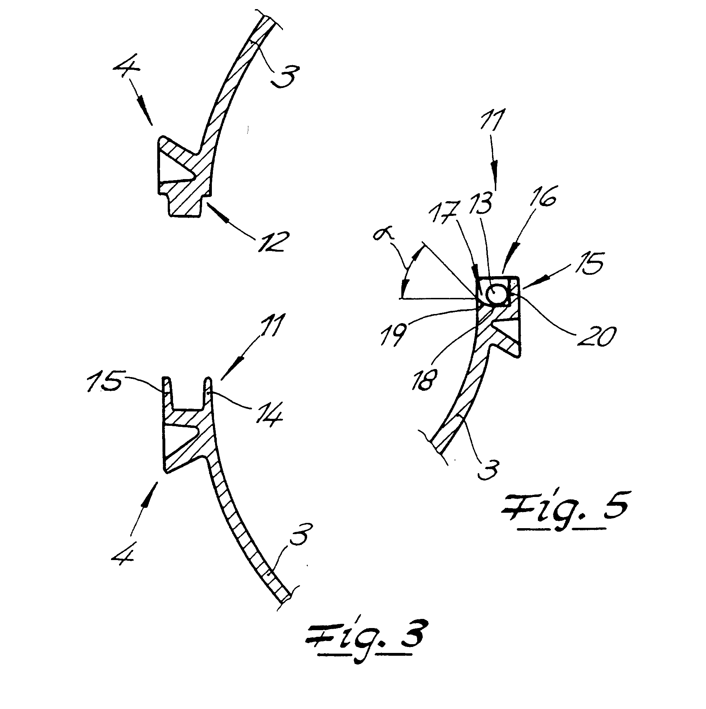

- Fig. 3: einen Querschnitt durch das Muffenrohr im Längsteilungsbereich,

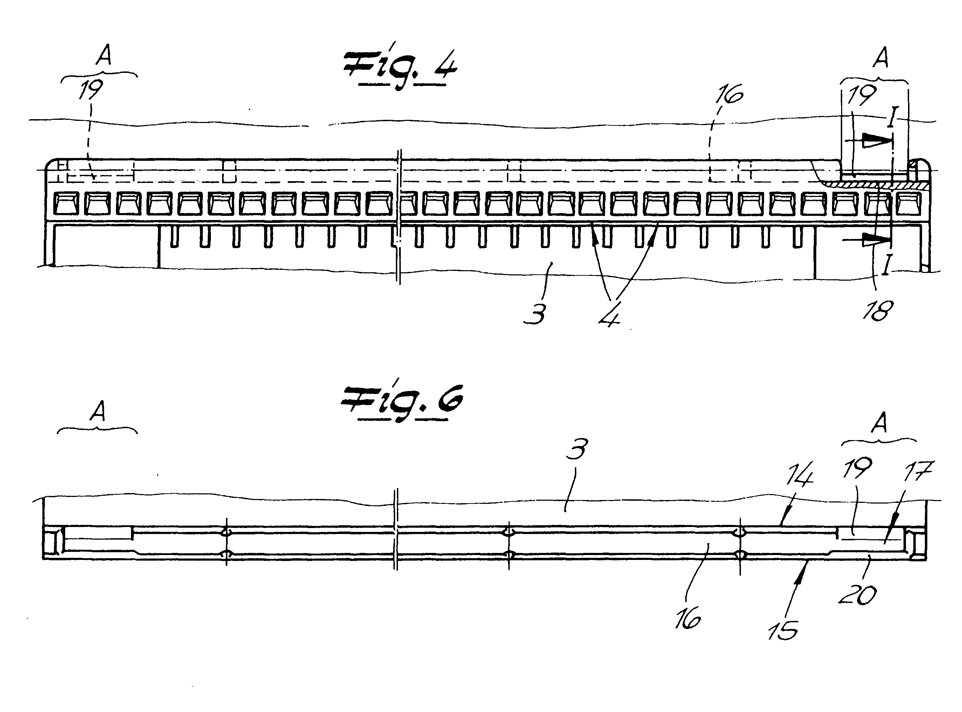

- Fig. 4: den Gegenstand nach Fig. 3 in Seitenansicht,
- Fig. 5: einen Schnitt I-I durch den Gegenstand nach Fig. 4 und
- Fig. 6: eine Aufsicht auf den Gegenstand nach Fig. 4.

In den Figuren ist eine Kabelmuffe 1 für das Verbinden und Abzweigen von Kabeln 2, insbesondere Fernmeldekabeln, dargestellt, die in ihrem grundsätzlichen Aufbau ein längsgeteiltes Muffenrohr 3 aus Kunststoff und die Längsteilung begrenzende Verschlußprofile 4 sowie zum stirnseitigen Abschluß des Muffenrohres 3 von dem Muffenrohr 3 ummantelte Dichtkörper 5 mit an unterschiedliche Kabeldurchmesser anpaßbaren Kabeldurchführungen 6 und zwischen dem Muffenrohr 3 und den Dichtkörpern 5 in umlaufenden Fixierungsnuten 7 einpreßbare Umfangsdichtungen 8 aufweist. Das Verschließen des Muffenrohres 3 erfolgt mittels die Verschlußprofile 4 hintergreifender und übergreifender Verschlußspanner 9, so daß das Muffenrohr 3 nicht nur im Bereich seiner Längsteilung verspannt, sondern auch auf die Dichtkörper 5 und folglich die Umfangsdichtungen 8 aufgespannt wird bzw. die Dichtkörper 5 und Umfangsdichtungen 8 gleichsam umspannt. Um ein daraus resultierendes Überdehnen bzw. Aufweiten des aus einer Kunststoffmanschette hergestellten Muffenrohres 3 zu vermeiden, weist das Muffenrohr 3 im Bereich seiner beiden Stirnenden eine bis in den Bereich der Längsteilung umlaufende Mantelverstärkung 10 auf. Die Mantelverstärkungen 10 sind als Materialverdickungen vorgegebener Breite B und Stärke S ausgebildet und übersteigen die Umfangsdichtungen 8 beidseitig. Nach dem Ausführungsbeispiel beträgt die Breite B der Mantelverstärkungen 10 ca. 50 mm und deren Stärke S ca. 2 mm, so daß das 4 mm dicke Muffenrohr 3 im Bereich der Mantelverstärkungen 10 insgesamt 6 mm dick ist. Selbstverständlich können auch andere Maße gewählt werden. Die Mantelverstärkungen 10 sind als außenseitige Anformungen ausgebildet und lassen sich dadurch in fertigungstechnischer Hinsicht unschwer verwirlichen.

Zum Verschließen der Längsteilung selbst ist eine Nut/Federverbindung 11, 12 aus einem U-förmigen Nutprofil 11 zur Aufnahme einer Längsdichtung 13 an dem einen Stoßrand und einem in das Nutprofil eingreifenden Federprofil 12 an dem anderen Stoßrand der Längsteilung zum Verpressen der Längsdichtung 13 vorgesehen. Die Schließ- und Preßkräfte werden mittels der Verschlußspanner 9 erzeugt.

Das U-förmige Nutprofil 11 weist einen sich in Umfangsrichtung des Muffenrohres 3 erstreckenden Innenschenkel 14 und einen Außenschenkel 15 auf. In den Bereichen der sich kreuzenden Längsdichtung 13 und Umfangsdichtungen 8 ist der Innenschenkel 14 entfernt, das Nutprofil 11 also zur Rohrinnenseite hin geöffnet. Dadurch wird im Zuge des Verschließens des Muffenrohres 3 die Längsdichtung 13 gegen die Umfangsdichtungen 8 angedrückt. Die Längsnut 16 weist in den innenschenkelfreien Bereichen Aeine Kammerverengung 17 auf, um dort eine besonders starke Verpressung der Längsdichtung 13 und folglich besonders intensives Anschmiegen der Längsdichtung 13 gegen die Umfangsdichtungen 8 unter Erzeugung hoher spezifischer Flächenpressungen zu erreichen. Die Kammerverengung 17 ist durch einen gegen den innenschenkelfreien Bereich ansteigenden Nutengrund 18 des Nutenprofils 11 gebildet. Der Anstieg des Nutengrundes 18 ist nach dem Ausführungsbeispiel als bogenförmig eingezogene Anformung 19 ausgebildet, die unter Bildung eines spitzen Winkels α in der Innenfläche des Muffenrohres 3 ausläuft. Um die im Zuge der erhöhten Verpressung der Längsdichtung 13 auftretenden Beanspruchungen einwandfrei aufnehmen zu können, weist der Außenschenkel 15 des Nutprofils 11 im innenschenkelfreien Bereich eine Schenkelverdickung 20 auf, ist dort also als verstärkter Schenkel ausgebildet.

## Patentansprüche

1. Kabelmuffe (1) für das Verbinden und Abzweigen von Kabeln (2), insbesondere Fernmeldekabeln, mit einem längsgeteilten Muffenrohr (3) mit einer Nut/Federverbindung (11, 12) für die Längsteilung aus einem U-förmigen Nutprofil (11) zur Aufnahme einer Längsdichtung (13) und einem in das Nutprofil (11) eingreifenden Federprofil (12) zum Verpressen der Längsdichtung (13), mit zum stirnseitigen Abschluß des Muffenrohres (3) von dem Muffenrohr (3) ummantelten Dichtkörpern (5) mit zwischen dem Muffenrohr (3) und den Dichtkörpern (5) in Umfangsnuten verpreßten Umfangsdichtungen (8), wobei das U-förmige Nutprofil (11) einen sich in Umfangsrichtung des Muffenrohres (3) erstreckenden Innenschenkel (14) und einen Außenschenkel (15) aufweist und in den Berelchen der sich kreuzenden Längsdichtung (13) und Umfangsdichtungen (8) der Innenschenkel (14) entfernt und die Längsdichtung (13) gegen die Umfangsdichtungen (8) angedrückt ist, dadurch gekennzeichet, daß die Längsnut (16) in den innenschenkelfreien Bereichen eine Kammerverengung (17) aufweist.

2. Kabelmuffe nach Anspruch 1, **dadurch gekennzeichnet, daß** die Kammerverengung (17) durch einen gegen den innenschenketfreien Bereich (A) ansteigenden Nutengrund (18) gebildet ist.

3. Kabelmuffe nach Anspruch 1 oder 2, **dadurch gekennzeichnet, daß** der Anstieg des Nutengrundes (18) als keilförmige oder bogenförmig eingezogene Anformung (19) ausgebildet ist, die unter Bildung eines spitzen Winkels ( α ) In der Innenfläche des Muffenrohres (3) ausläuft.

4. Kabelmuffe nach einem der Ansprüche 1 bis 3, **dadurch gekennzeichnet, daß** der Außenschenkel (15) in den innenschenkelfreien Bereichen (A) als verstärkter Schenkel ausgebildet ist, z B. eine Schenkelverdickung (20) aus gleichem Kunststoffmaterial aufweist.

## Claims

1. A cable sleeve (1) for the connecting and branching of cables (2), in particular telecommunications cables, with a longitudinally divided sleeve tube (3) with a groove and tongue joint (11, 12) for the longitudinal division, made of a U-shaped groove section (11) to receive a longitudinal seal (13) and of a tongue section (12) engaging into the groove section (11) to press the longitudinal seal (13), with sealing bodies (5) sheathed by the sleeve tube (3) for the closure of the sleeve tube (3) on the end face, with circumferential seals (8) pressed in circumferential grooves between the sleeve tube (3) and the sealing bodies (5), wherein the U-shaped groove section (11) has an inner shank (14), extending in circumferential direction of the sleeve tube (3), and an outer shank (15), and in the regions of the intersecting longitudinal seal (13) and circumferential seals (8) the inner shank (14) is removed and the longitudinal seal (13) is pressed against the circumferential seals (8), **characterised in that** the longitudinal groove (16) has a chamber constriction (17) in the regions which are free of the inner shank.

2. A cable sleeve according to Claim 1, **characterised in that** the chamber constriction (17) is formed by a groove base (18) rising towards the region (A) which is free of the inner shank.

3. A cable sleeve according to Claim 1 or 2, **characterised in that** the rise of the groove base (18) is constructed as a formed-on portion (19) which is wedge-shaped or retracted in a curved shape, which runs out with the formation of an acute angle (α) in the inner surface of the sleeve tube (3).

4. A cable sleeve according to one of Claims 1 to 3, **characterised in that** the outer shank (15) is constructed in the regions (A) which are free of the inner shank as a reinforced shank, e.g. has a shank thickening (20) of the same plastics material.

## Revendications

1. Manchon de câble (1) pour le raccordement et la dérivation de câbles (2), en particulier de câbles de télécommunication, comportant un tube de manchon (3) partagé longitudinalement avec un assemblage à rainure et languette (11, 12) pour la division longitudinale, fait d'un profilé rainuré en U (11) destiné à recevoir une étanchéité longitudinale (13) et d'un profilé à languette (12) s'engageant dans le profilé rainuré (11) pour presser l'étanchéité longitudinale (13), comportant des corps d'étanchéité (5) enveloppés par le tube de manchon (3), pour la fermeture frontale du tube de manchon (3) avec des étanchéités périphériques (8) pressées entre le tube de manchon (3) et les corps d'étanchéité (5), dans des rainures périphériques, le profilé rainuré en U (11) présentant une aile intérieure (14) s'étendant dans la direction périphérique du tube de manchon (3) et une aile extérieure (15) et, dans les zones de l'étanchéité longitudinale (13) et des étanchéités périphériques (8) se croisant, l'aile intérieure (14) étant éloignée et l'étanchéité longitudinale (13) étant pressée contre les étanchéités périphériques (8), **caractérisé en ce que** la rainure longitudinale (16) présente un rétrécissement de chambre (17) dans les zones sans aile intérieure.

2. Manchon de câble selon la revendication 1, **caractérisé en ce que** le rétrécissement de chambre (17) est formé par un fond de rainure (18) montant vers la zone sans aile intérieure (A).

3. Manchon de câble selon les revendications 1 ou 2, **caractérisé en ce que** la montée du fond de rainure (18) est une formation (19) en forme de coin ou d'arc en retrait, qui en formant un angle aigu (α) se termine dans la surface intérieure du tube de manchon (3).

4. Manchon de câble selon l'une des revendications 1 à 3, **caractérisé en ce que** l'aile extérieure (15) est configurée, dans les zones sans aile intérieure (A) en aile renforcée, **en ce qu'**elle présente par exemple une surépaisseur d'aile (20) dans la même matière plastique.
